# EUROPEAN PATENT SPECIFICATION

(11) **EP 3 479 142 B1**
(45) Date of publication and mention of the grant of the patent: **15.11.2023**
(21) Application number: 17736741.4
(22) Date of filing: 30.06.2017
(51) Int. Cl.: G01T 1/169

(54) **RADIATION IMAGING APPARATUS**
STRAHLUNGSABBILDUNGSVORRICHTUNG
APPAREIL D'IMAGERIE RADIOLOGIQUE

(30) Priority: 30.06.2016 GB 201611506
(43) Date of publication of application: 08.05.2019
(73) Proprietor: Create Technologies Limited, Cockermouth, Cumbria CA13 0HT (GB)
(72) Inventor: MELLOR, Matthew Paul, Cockermouth Cumbria CA13 0HT (GB); NAPIER, Ashley, Cockermouth Cumbria CA13 0HT (GB)
(74) Representative: J A Kemp LLP
(86) International application number: PCT/GB2017/051933
(87) International publication number: WO 2018/002655

(56) References cited:
- WO-A1-03/046611
- WO-A1-2015/024694
- US-A1- 2010 262 400
- US-A1- 2012 043 471

## Description

The present invention relates to a radiation imaging apparatus, a radiation imaging method and a computer program.

When operating or decommissioning a facility containing radioactive material it is frequently necessary to understand the distribution of that material such that its effects on the environment and any persons entering that environment can be determined. It is often the case that the physical properties of such a facility need to be determined also. Conventional methods for determining this information typically involve bulky equipment and rely on external references such as markers or fixed reference points, at various positions around the facility. This is often not permitted or practical in a potentially contaminated environment.

WO 03/046611 Al discloses an environmental radiation detector including an optical imaging device for imaging real world structures, a position and orientation detector, a radiation detector and an image generator for generating data for a combined image comprising an optical image of the real world structrures imaged by the optical imaging device and an overlay image representing the distribution of radiation sources.

The present invention aims to alleviate this issue by providing an apparatus and a method to collect both spatial and radiological data in a manner that is completely independent of the facility being surveyed and can be deployed without reliance on any external input or reference.

The invention is defined in the claims.

An embodiment of this invention relates to an autonomous, portable radiometric modelling tool for collecting spatially registered, collimated radiation measurements within a region such as a nuclear facility and analysing them to identify the distribution of radioactive sources within a facility.

Embodiments of the invention make it possible to collect both spatial and radiological data in a manner that is independent of the facility being surveyed and can be deployed without reliance on any external input or reference.

Embodiments of the invention will now be described, by way of example only, with reference to the accompanying drawings in which:
Figure 1 schematically depicts a radiation imaging apparatus according to an embodiment of the invention; and
Figure 2 schematically depicts the scanning plane of a LIDAR of a radiation imaging apparatus according to an embodiment of the invention.

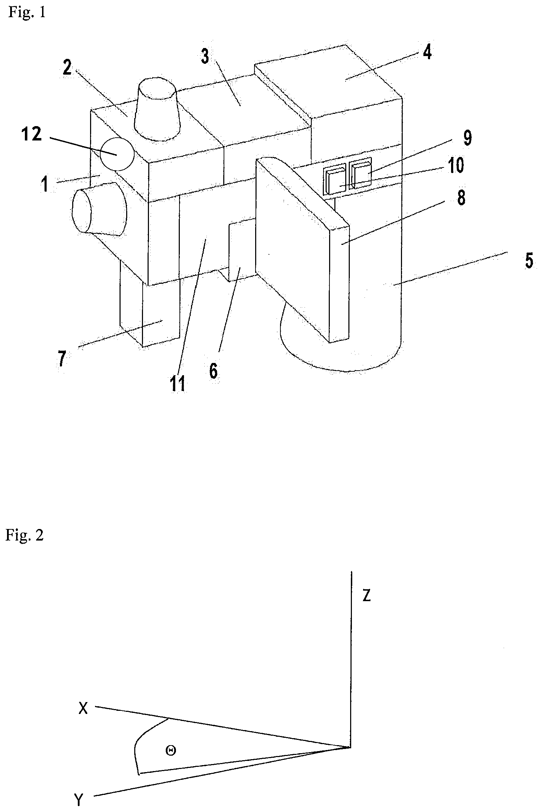

Figure 1 schematically depicts a radiation imaging apparatus according to an embodiment of the invention. The radiation imaging apparatus can be used in a method for collecting spatially registered radiological measurements.

The radiation imaging apparatus comprises a radiation detector 7.The radiation detector 7 is configured to detect ionising radiation. The radiation detector 7 is a means of measuring the level of ionising radiation. Optionally, the radiation detector 7 is configured to measure a magnitude of collimated ionising radiation.

The radiation imaging apparatus comprises a position and orientation detector 1-3.The position and orientation detector 1-3 is configured to determine an instantaneous position and orientation of the radiation imaging apparatus in six degrees of freedom relative to real world structures as a fixed frame of reference.

The radiation imaging apparatus comprises an optical imaging device 12. The optical imaging device 12 is configured to image the real world structures. The radiation imaging apparatus that comprises the position and orientation detector 1-3 and the optical imaging device 12 is a means of continuously recording spatial data such that a 3D model can be generated as the radiation imaging apparatus is moved around the area.

The measurement of radiological and geometrical data is achieved using a combination of sensors configured to determine the six degrees of freedom required to accurately establish the location and orientation of the radiation imaging apparatus relative to real world structures. As depicted in Figure 1, the position and orientation detector 1-3 of the radiation imaging apparatus optionally comprises two range sensors 1, 2 and an orientation detector 3. However, this is not necessarily the case. In alternative embodiments the position and orientation detector 1-3 of the radiation imaging apparatus comprises only one range sensor 1, or more than two range sensors.

Each range sensor 1, 2 is configured to measure range data of distances from the radiation imaging apparatus to real world structures in at least two dimensions. The range data is interpreted by an algorithm to determine an instantaneous position of the radiation imaging apparatus in at least two dimensions relative to the real world structures as a fixed frame of reference. The range sensors 1, 2 combine with software running the algorithm to determine the position of the radiation imaging apparatus relative to the real world structures. Accordingly, each radiological measurement is performed at a known position. The software comprises part of the position and orientation detector 1-3. Optionally, the software is embodied in a processing unit 4 of the radiation imaging apparatus.

Each range sensor 1, 2 is configured to measure the distance (i.e. range) from the radiation imaging apparatus to a real world object, such as a wall. The range sensor 1, 2 is configured to measure time-varying range data about how far the radiation imaging apparatus is from real world structures in different directions. In particular, the first range sensor 1 is configured to measure the range to real world objects in the XY plane. The range data is then used to determine the position of the radiation imaging apparatus to the real world objects. This is done by aligning the range data to known information about the real world structures.

For example, the range data may provide information about the distance from the radiation imaging apparatus to a series of points of a room. The position of the radiation imaging apparatus can then be determined by aligning the range data to a map of the room. The map of the room is an example of known information about the layout of the real world structures. Hence, the measured range data is interpreted to provide positional information relative to the real world structures. This interpretation is performed by software that runs an algorithm configured to deduce the motion of the radiation imaging apparatus by aligning the range data with reference range data (e.g. a map).

By aligning the measured range data to reference range data (e.g. a map of the real world structures), the position of the radiation imaging apparatus can be determined relative to the real world structures as the fixed frame of reference. This is different from other means of detecting position such as GPS, radio beacon methods and QR code readers. GPS, radio beacon methods and QR code readers rely on measuring the distance to satellites, beacons or QR codes that have a known position in another coordinate system. The position of the reader can be determined by measuring the distance to multiple satellites, beacons or QR codes and solving equations to determine the position of the reader within that coordinate system. These methods do not involve aligning the measured distances to the satellites, beacons or QR codes to reference range data.

The invention does not require any real world objects to be installed for the purpose of position determination. In particular, the invention does not require any satellite, beacon or QR code. The real world structures are not satellites, beacons or QR codes. Instead, each range sensor 1, 2 measures the range to objects that just happened to be there. The position of the objects in another coordinate system is not required to be known. The measured range data is aligned with the reference range data so that the real world structures themselves become the fixed frame of reference.

Alignment of range data may be achieved by any algorithm which is capable of calculating a transform between the current range data and one or more examples of reference range data. It is preferable in the present application that such algorithms be designed to keep computation demands to a minimum in order that the physical space and power requirements of the radiation measurement device can be kept low. An algorithm which is particularly suitable for aligning horizontal-plane range data is described:
1) Each example of horizontal plane range data (either current or reference) is 'rotational normalised' based on intrinsic properties of the data rather than by comparing with reference data. This reduces the dimension of the alignment problem space from three dimensions (X,Y,Theta) to two dimensions (X, Y). A good measure of intrinsic orientation in man-made environments is to apply a candidate rotation, calculate a onedimensional histogram, H, of X values and Y values of the range data and then to calculate the entropy of this histogram (approximated by the sum of H multiplied by the natural logarithm of H). The intrinsic orientation is that which minimises the entropy score. Note that it is only necessary to search over a 90 degree range of orientation as this measure of orientation is invariant to rotations of 90 degrees.
2) The two dimensional search can then be reduced to two one dimensional searches by comparing the X and Y histograms of the current and reference range data. To align the X axes of the current data with the reference scan, it is sufficient to search for the maximum of F(Rx(X),Cx(X+Xo)) with respect to Xo, where F is a similarity measure function whose output is maximised when the histograms are aligned, Rx(X) is the histogram of X values of the reference data, Cx(X) is a histogram of the current data and Xo is a candidate value for the X offset between reference data and current data. F can be any measure of similarity between histograms or probability distributions; the simplest method being the dot product of the two input histograms. Because this method is computationally inexpensive, it is generally possible to maximise F(Rx(i),Cx(i+Xo)) by exhaustive search. Note that, because of the symmetry of the orientation normalisation step with respect to 90 degree rotations, it is not sufficient to compare Cx(i) with Rx(i) and Cy(i) with Ry(i) because there may be an orientation shift of a multiple of 90 degree between reference and current data. This can be resolved by aligning all four possible orientations independently and taking the orientation with the highest alignment score as the true orientation. The four alignments can be implemented by comparing: Cx(i) with Rx(i) and Cy(i) with Ry(i); Cx(i) with Ry(i) and Cy(i) with Rx(-i); Cx(i) with Rx(-i) and Cy(i) with Ry(-i); and Cx(i) with Ry(-i) and Cy(i) with Rx(i).

The algorithm related above will also work for vertical lidar data if step 2 is restricted to a the vertical dimension only. As described, the algorithm is limited to the case where the current data overlaps significantly with the reference data. In applications where this is not the case, the algorithm can be extended by introducing the concept of a key-frame. When the current range data is found to be offset from the reference data by some predetermined distance threshold, or when the similarity score drops beneath a predetermined threshold, the current frame is nominated as a 'key-frame'. Subsequent range data will be registered to the most recent fey-frame rather than the original reference data. The alignment between the original reference data and the current data can then be deduced by combining the transform between the current data and the current key-frame with the transform between the current key-frame and the reference frame (which may itself depend on the transforms of other intermediate key-frames).

Optionally, the first range sensor 1 is configured to measure range data of distances from the radiation imaging apparatus to real world structures in the horizontal (XY) plane. Optionally, each range sensor 1, 2 is configured to measure range data of distances from the radiation imaging apparatus to real world structures using Light Detection and Ranging (LIDAR), Sound Navigation and Ranging (SONAR) or Radio Detection and Ranging (RADAR). The first range sensor 1 could be a LIDAR instrument, a SONAR instrument or a RADAR instrument. Each range sensor 1, 2 is capable of measuring the distance from the radiation imaging apparatus to real world structures, surrounding the radiation imaging apparatus.

When the first range sensor l i s a LIDAR instrument, the LIDAR instrument is configured to rotate around the Z axis as shown in Figure 2 making an angle theta to the X axis where theta = angular velocity x time. The first range sensor 1 is configured to scan the XY plane, making a series of measurements of the distance at angle theta to the nearest surface based on the time of flight of laser pulses emitted by the LIDAR instrument and reflected off the surface. Change in position of the radiation imaging apparatus over time is measured by calculating the translation and rotation that best aligns the current range data with the previous (e.g. initial) range data. The reference range data to which measured rage data is aligned may be the initial range data measured when a survey is started. Hence, it is not necessary for a map of the region to be surveyed to be known. Even without such a map it is possible for a model of the region to be built up during the survey.

As depicted in Figure 1, the radiation imaging apparatus optionally comprises two range sensors 1, 2. However, this is not necessarily the case. In alternative embodiments the radiation imaging apparatus comprises only one range sensor 1, or more than two range sensors.

The radiation imaging apparatus is portable. The radiation imaging apparatus forms images as it moves. Optionally, the radiation imaging apparatus is hand held. The radiation imaging apparatus does not remain fixed in the XY plane throughout the survey, and it may move vertically. It may be tilted, giving a false impression of the surrounding world. Optionally, to counteract this, the output from the first range sensor 1 (i.e. the horizontal range sensing device) is corrected for tilt as described below.

Optionally, the position and orientation detector 1-3 of the radiation imaging apparatus comprises an orientation detector 3. The orientation detector 3 is configured to determine at least one of an instantaneous yaw, an instantaneous roll and an instantaneous pitch of the radiation imaging apparatus relative to the real world structures. The orientation detector 3 is configured to measure the tilt of the radiation imaging apparatus such that a correction factor can be applied to the XY data to ensure it represents a more accurately horizontal plane. Optionally, the orientation detector 3 is an Inertial Measurement Unit (IMU) configured to measure at least six degrees of freedom. Optionally, the radiation imaging apparatus comprises a magnetometer for improved orientation accuracy.

Optionally, the radiation imaging apparatus comprises a mechanical stabiliser device.

Optionally, the mechanical stabiliser device is fitted to the rest of the radiation imaging apparatus so as to prevent or reduce any tilt.

Optionally, the radiation imaging apparatus comprises a positional feedback provider.

The positional feedback provider is configured to output to a user information to help the user move the radiation imaging apparatus to a target position and/or orientation relative to the real world structures. Optionally, the positional feedback provider is configured to output to the user information to help the user change at least one of the yaw, the roll and the pitch of the radiation imaging apparatus to a target yaw, a target roll and a target pitch, respectively, relative to the real world structures. Optionally, the positional feedback provider is configured to provide feedback to allow the user to manually correct for any tilt.

If an IMU is used as the orientation detector 3, the instantaneous pitch, roll and yaw of the radiation imaging apparatus can be measured such that, when combined with the data measured by the first range sensor 1, five of the six degrees of freedom are known (X,Y, pitch, roll and yaw).

In order to determine the position of the detector in the Z direction, or height above the ground, another sensor, i.e. the second range sensor 2, is required. Optionally, a second LIDAR, SONAR or RADAR detector could be used. Optionally, the radiation imaging apparatus comprises a processing unit 4 (also called a main processing unit). Utilising the assumption that the ground is flat and once the angle of the radiation imaging apparatus (away from vertical) is known, trigonometry can be used to calculate the height of the radiation imaging apparatus. Optionally, the processing unit 4 is configured to calculate the height of the radiation imaging apparatus based on the angle of the radiation imaging apparatus as measured by the orientation detector 3. Optionally, the second range sensor 2 is rigidly attached to the first range sensor 1. The data output by the range sensor 1, 2 can be used to build a 3D model. This is achieved by placing each planar cross section of the workspace geometry captured by either the LIDAR, SONAR or RADAR sensing devices (i.e. the range sensors 1, 2) into a common reference frame. This aggregation of multiple cross-sections results in a 3D model of the workspace, in the crudest sense this is the 3D variant of a raster scan. As the radiation imaging apparatus is moved through the workspace more cross sections are captured making the 3D model a more complete representation of the workspace. When all six degrees of freedom are known the position of the radiation imaging apparatus within the 3D model can be accurately plotted by the processing unit 4. Optionally, the radiation imaging apparatus comprises a 3D model generator configured to define a 3D model of the real world structures based on data from the position and orientation detector 1-3.

Optionally, the processing unit 4 is configured to receive range data from the first range sensor 1 and, if the second range sensor 2 is provided, also from the second range sensor 2. The processing unit 4 is configured to compare the range data with previous range data (possibly the initial range data). The processing unit 4 is configured to calculate the translation and rotation that best aligns the current range data with the previous (e.g. initial) range data so as to measure a change in position and/or orientation of the radiation imaging apparatus over time. Alternatively, the processes of comparing the range data and calculating the translation and rotation to measure the change in position may be performed by a processor that is positioned remotely from the radiation imaging apparatus.

Additionally or alternatively, the radiation imaging apparatus comprises a height detector configured to determine an instantaneous height of the radiation imaging apparatus above a floor. Optionally, the height detector is a sensor that directly measures a property that changes predictably with changes of position in the Z direction. For example, optionally the radiation imaging apparatus comprises a barometric pressure sensor.

Optionally, the radiation imaging apparatus comprises a collimator. The collimator is configured to collimate ionising radiation. The radiation detector 7 is configured to detect ionising radiation collimated by the collimator. The collimator and the radiation detector 7 combine to collect radiological data. Optionally, the functions of the collimator and the radiation detector 7 are embodied in the same device, for example a Compton camera or a collimated gamma spectrometer. A Compton camera is configured to determine the direction of received radiation without using a collimator. The types of radiation that are measured may not be limited to gamma rays but may be any type or types of ionising or non-ionising radiation. The device collects a series of measurements of the radiation field emanating from a particular direction from a set of known positions, determined by the position and orientation detector 1-3 described above. Optionally, the radiation detector 7 is rigidly attached to the position and orientation detector 1-3 (i.e. the spatial detector).

Optionally, the optical imaging device 12 is a camera. The optical imaging device 12 is configured to capture a video representation of the environment for presentational use.

The output from the position and orientation detector 1-3, the radiation detector 7 and the optical imaging device 12 described above is a three dimensional (3D) model of the facility, a series of radiation measurements, a series of images of the facility and a set of coordinates (optionally corrected for orientation of the radiation imaging apparatus) that describe the location and orientation of each radiation measurement and image within the 3D model. Optionally, the radiation imaging apparatus comprises a suitable storage device for storing this information on board the radiation imaging apparatus such that the information can be retrieved for further processing or manipulation.

Optionally, the information gathered by the radiation imaging apparatus described above is used to predict the distribution of radioactive sources within the facility. Optionally, the method outlined in European patent 2074442 could be used. This computation may be done on the radiation imaging apparatus in real time (e.g. by the processing unit 4), for example in order to allow a representation of the radiological sources to be overlaid on a graphical representation of the surveyed region computed from images captured using the optical imaging device, or it may be done offline post-capture. Optionally, the radiation sources are defined as being restricted to surfaces of the real world structures in the 3D model

The processing unit 4 comprises a radiation source determination section. The radiation source determination section is configured to determine a distribution of radiation sources based on data of the collimated ionising radiation detected by the radiation detector 7 combined with data of the position and orientation of the radiation imaging apparatus relative to the real world structures. Optionally, the radiation source determination section is configured to determine a radioactivity of the radiation sources. Optionally, the radiation source determination section is configured to determine the distribution of radiation sources based at least partly on data of collimated ionising radiation previously detected by the radiation detector 7 and stored in a local memory.

The processing unit 4 comprises an image generator configured to generate data for a combined image comprising an optical image of the real world structures imaged by the optical imaging device 12 and an overlay image representing the distribution of radiation sources based on data from the radiation source determination section. Optionally, the image generator is configured to generate data for the combined image such that the overlay image represents the radioactivity of radiation sources based on data from the radiation source determination section. Optionally, the radiation imaging apparatus comprises a display 8 configured to display the combined image based on the data generated by the image generator. However, it is not necessary for the radiation imaging apparatus to comprise a display 8. Optionally, the radiation imaging apparatus comprises an image data output device configured to output to an external device the data generated by the image generator. Optionally, the image generator is configured to generate data for the combined image such that the optical image is a real time optical image of the real world structures imaged by the optical imaging device 12.

Optionally, the image generator is configured to generate data for the combined image such that the overlay image is added to as more data of collimated radiation detected by the radiation detector 7 is used by the radiation source determination section to determine the distribution of radiation sources.

A real-time presentation of the model provides immediate feedback for operatives carrying out the survey, whereas post-capture analysis permits creation of a more refined facility model by using all the geometrical sensor information obtained throughout the entire survey, not merely that subset which is available in "real-time" mode, i.e. the information obtained up to the current time.

The radiation imaging apparatus illustrated in Figure 1 comprises two LIDAR sensors mounted such that one scans the XZ vertical plane while the other scans the XY horizontal plane, as geometrical measurement devices of the position and orientation detector 1-3. It is not essential to have two range sensors 1,2. In an alternative embodiment the radiation imaging apparatus comprises only one range sensor 1, such that the position of the radiation imaging apparatus can be determined in two dimensions (i.e. in the XY plane). Optionally, the radiation imaging apparatus comprises a height detector configured to measure the height of the radiation imaging apparatus. In these embodiments, LIDAR data is used to improve the accuracy and stability of roll correction

as follows: a histogram is made of the vectors between successive LIDAR echoes. Peaks appear in the histogram separated by 90 degrees, representing the floor / ceiling and the walls as real world structures. Assuming that the structure of the surrounding region does not fundamentally change between scans, the histogram obtained from successive scans will be similar but offset by any change in the roll angle of the unit. This therefore provides a means of detecting and correcting for changes in roll angle which is used to refine the data obtained from the IMU as the orientation detector 3 of the position and orientation detector 1 -3.

It is not necessary for the range sensors 1, 2 to be LIDAR instruments. In other embodiments SONAR, RADAR or other forms of scanning or staring distance measurement sensors may be used. Optionally, the radiation detector 7 (also called a radiometric sensor) is a Geiger-Muller tube. However, in other embodiments the radiation detector 7 is, for example, an uncollimated total-counts gamma radiation sensor an uncollimated total absorbed dose radiation sensor or any other type of radiation sensor as required by the application. The radiation detected by the radiation detector 7 is not limited to gamma radiation but may be any type or types of ionising or non-ionising radiation. Optionally, the radiation imaging apparatus comprises a frame 11. Optionally, the radiation detector 7 and the position and orientation detector 1-3 are mounted together, e.g. on the frame 11, so that they are fixed relative to each other. Optionally, the frame 11 is hand-held or may then be mounted on a remote deployment platform, for example a long pole or a remotely operated vehicle, such as a remotely controllable platform with robotic arm, or a quadcopter. This is particularly advantageous if deployment is desirable in a region where expected radiation levels are too high to permit human entry.

Optionally, the radiation imaging apparatus comprises a handle 5.

Optionally, the display 8 is mounted to the frame 11 so that the display 8 can display instructions directing the user to the next measurement point. Optionally, the radiation imaging apparatus comprises a trigger 10. The trigger 10 may be provided so that once at the correct location the user can provide an input causing the radiation imaging apparatus to take a spatially tagged radiation measurement. In other embodiments, the measurement could be triggered automatically once the radiation imaging apparatus is sufficiently close to the intended location, or could be triggered by other means of user input.

Optionally, the optical imaging device 12 is mounted rigidly to the frame 11 in order to allow images of the facility to be captured so that the processed radiation source data can be overlaid onto a camera representation of the facility. Optionally, the radiation imaging apparatus comprises a battery 6 configured to provide electrical power to the radiation imaging apparatus.

Optionally, the radiation imaging apparatus comprises a switch 9. In use, the radiation imaging apparatus is taken to the facility to be modelled and is switched on using switch 9. On completion of the power-up sequence, surveying is started automatically. The radiation imaging apparatus starts to record positional data as follows: the range sensors 1 and 2 record distances to real-world structures within their respective measurement planes and the orientation detector 3 records relative position and orientation continuously.

This data is stored on a storage medium within the processing unit 4 and is also processed in real time using an algorithm to build up a 2D model of the surveyed region. Optionally, the processing unit 4 comprises the software that is configured to align the measured range data with reference range data so as to determine the instantaneous position of the radiation imaging apparatus in at least two dimensions relative to the real world structures as a fixed frame of reference.

The Manhattan world assumption, that structures appear little different from observation points closely spaced along the Z axis, is used in processing. This model is held in the processing unit 4. The processing unit 4 is also loaded up with a set of survey locations relative to the facility structure.

Radiation measurements are taken at a pre-determined interval. Additional measurements at user-selected orientations may be captured using the trigger 10. When each radiation measurement is completed it is tagged with a location, relative to the 2D region model, calculated from the range sensors 1, 2 and the orientation detector 3, and stored in the storage attached to main processing unit 4.

The facility could be a single room, multiple rooms in a building, the exterior surface of building walls or indeed any three dimensional environment containing unknown distribution of radioactive material in which it is possible to determine location and orientation using the inbuilt position and orientation detector 1-3. The general term "region" is used for any such facility or space for which it is intended to determine the distribution of radioactive material. The number of observations required will be determined by the scale and complexity of the survey region, but may typically be 50-200 for a small region.

After data collection is complete the data is transferred from the apparatus to a separate computer system for analysis using the methods described in European patent 2074442. In other embodiments the data could be analysed on the device in real time to produce a false colour "hot spot" map suitable for overlaying on the live image data provided by the optical imaging device 12.

### List of reference numerals used in Figure 1:

- 1.: first range sensor
- 2.: second range sensor
- 3.: orientation detector
- 4.: processing unit
- 5.: handle
- 6.: battery
- 7.: radiation detector
- 8.: display
- 9.: switch
- 10.: trigger
- 11.: frame
- 12.: optical imaging device

## Claims

1. A radiation imaging apparatus comprising:
an optical imaging device (12) configured to image real world structures;
a position and orientation detector (1-3) configured to determine an instantaneous position and orientation of the radiation imaging apparatus in six degrees of freedom relative to the real world structures as a fixed frame of reference;
a radiation detector (7) configured to detect ionising radiation;
a radiation source determination section (4) configured to determine a distribution of radiation sources based on data of the ionising radiation detected by the radiation detector (7) combined with data of the position and orientation of the radiation imaging apparatus relative to the real world structures; and
an image generator (4) configured to generate data for a combined image comprising an optical image of the real world structures imaged by the optical imaging device (12) and an overlay image representing the distribution of radiation sources based on data from the radiation source determination section (4),
wherein the position and orientation detector (1-3) comprises a range sensor (1) configured to measure range data of distances from the radiation imaging apparatus to real world structures in at least two dimensions;
the radiation imaging apparatus comprises a processing unit (4) configured to align the measured range data with reference range data of the real world structures so as to determine an instantaneous position of the radiation imaging apparatus in at least two dimensions relative to the real world structures as a fixed frame of reference; and
the processing unit (4) is configured to calculate a translation and rotation that best aligns the measured range data with previously measured range data so as to measure a change in position and/or orientation of the radiation imaging apparatus over time.

2. The radiation imaging apparatus of claim 1, wherein:
the radiation detector (7) is configured to measure a magnitude of ionising radiation; and
the radiation source determination section (4) is configured to determine a radioactivity of the radiation sources.

3. The radiation imaging apparatus of claim 2, wherein the image generator (4) is configured to generate data for the combined image such that the overlay image represents the radioactivity of radiation sources based on data from the radiation source determination section (4).

4. The radiation imaging apparatus of any preceding claim, wherein:
the radiation imaging apparatus comprises a collimator configured to collimate ionising radiation, wherein the radiation detector (7) is configured to detect ionising radiation collimated by the collimator; or
the radiation detector (7) is a Compton camera configured to detect ionising radiation.

5. The radiation imaging apparatus of any preceding claim, wherein the processing unit (4) is configured to align the measured range data with the reference range data in real time so as to build up a model of a surveyed region, wherein the model is in at least two dimensions.

6. The radiation imaging apparatus of claim 5, comprising:
a display (8) configured to display the model to the user.

7. The radiation imaging apparatus of any preceding claim, comprising:
a display (8) configured to output to a user information to indicate the instantaneous position of the radiation imaging apparatus within the fixed frame of reference.

8. The radiation imaging apparatus of any preceding claim, comprising:
a display (8) configured to display the combined image based on the data generated by the image generator (4); and/or
an image data output device configured to output to an external device the data generated by the image generator (4).

9. The radiation imaging apparatus of any preceding claim, wherein:
the position and orientation detector (1-3) is configured to determine the instantaneous position of the radiation imaging apparatus using LIDAR, SONAR or RADAR; and/or
the image generator (4) is configured to generate data for the combined image such that the optical image is a real time optical image of the real world structures imaged by the optical imaging device (12); and/or
the radiation source determination section (4) is configured to determine the distribution of radiation sources based at least partly on data of ionising radiation previously detected by the radiation detector (7) and stored in a local memory; and/or
the image generator (4) is configured to generate data for the combined image such that the overlay image is added to as more data of radiation detected by the radiation detector (7) is used by the radiation source determination section (4) to determine the distribution of radiation sources.

10. The radiation imaging apparatus of any preceding claim, comprising:
a 3D model generator configured to define a 3D model of the real world structures based on data from the position and orientation detector (1-3).

11. The radiation imaging apparatus of any preceding claim, wherein the radiation sources are defined as being restricted to surfaces of the real world structures in the 3D model.

12. The radiation imaging apparatus of any preceding claim, wherein:
the radiation imaging apparatus is portable; and/or
the radiation imaging apparatus is hand-held.

13. A radiation imaging method comprising:
imaging real world structures using a radiation imaging apparatus to provide an optical image of the real world structures;
determining an instantaneous position and orientation of the radiation imaging apparatus in six degrees of freedom relative to the real world structures as a fixed frame of reference;
detecting ionising radiation using the radiation imaging apparatus;
determining a distribution of radiation sources based on data of the ionising radiation detected by the radiation imaging apparatus combined with data of the position and orientation of the radiation imaging apparatus relative to the real world structures; and
generating data for a combined image comprising the optical image of the real world structures and an overlay image representing the distribution of radiation sources based on the determination of the distribution of radiation sources,
wherein the step of determining an instantaneous position and orientation of the radiation imaging apparatus comprises:
measuring range data of distances from the radiation imaging apparatus to real world structures in at least two dimensions; and
aligning the measured range data with reference range data of the real world structures so as to determine an instantaneous position of the radiation imaging apparatus in at least two dimensions relative to the real world structures as a fixed frame of reference;
wherein the method comprises calculating a translation and rotation that best aligns the measured range data with previously measured range data so as to measure a change in position and/or orientation of the radiation imaging apparatus over time.

14. A computer program comprising computer-executable code that when executed on a computer system comprising an optical imaging device (12) and a radiation detector (7) causes the computer system to perform a radiation imaging method, the method comprising:
the optical imaging device imaging real world structures to provide an optical image of the real world structures;
determining an instantaneous position and orientation of the computer system in six degrees of freedom relative to the real world structures as a fixed frame of reference;
the radiation detector detecting ionising radiation;
determining a distribution of radiation sources based on data of the ionising radiation combined with data of the position and orientation of the computer system relative to the real world structures; and
generating data for a combined image comprising the optical image of the real world structures and an overlay image representing the distribution of radiation sources based on the determination of the distribution of radiation sources,
wherein the step of determining an instantaneous position and orientation of the radiation imaging apparatus comprises:
measuring range data of distances from the radiation imaging apparatus to real world structures in at least two dimensions; and
aligning the measured range data with reference range data of the real world structures so as to determine an instantaneous position of the radiation imaging apparatus in at least two dimensions relative to the real world structures as a fixed frame of reference;
wherein the method comprises calculating a translation and rotation that best aligns the measured range data with previously measured range data so as to measure a change in position and/or orientation of the radiation imaging apparatus over time.

15. A computer-readable medium storing the computer program of claim 14.

## Patentansprüche

1. Strahlungsbildgebungsvorrichtung umfassend:
eine optische Bildgebungsvorrichtung (12), die dafür konfiguriert ist, Strukturen der realen Welt abzubilden;
einen Positions- und Orientierungsdetektor (1-3), der dafür konfiguriert ist, eine momentane Position und Orientierung der Strahlungsbildgebungsvorrichtung in sechs Freiheitsgraden relativ zu den Strukturen der realen Welt als fester Bezugsrahmen zu bestimmen;
einen Strahlungsdetektor (7), der dafür konfiguriert ist, ionisierende Strahlung zu erfassen;
einen Strahlungsquellenbestimmungsabschnitt (4), der dafür konfiguriert ist, eine Verteilung von Strahlungsquellen basierend auf Daten der von dem Strahlungsdetektor (7) erfassten ionisierenden Strahlung in Kombination mit Daten der Position und Orientierung der Strahlungsbildgebungsvorrichtung relativ zu den Strukturen der realen Welt zu bestimmen; und
einen Bildgenerator (4), der dafür konfiguriert ist, Daten für ein kombiniertes Bild zu erzeugen, das ein optisches Bild der durch die optische Bildgebungsvorrichtung (12) abgebildeten Strukturen der realen Welt und ein Überlagerungsbild umfasst, das die Verteilung der Strahlungsquellen basierend auf Daten aus dem Strahlungsquellenbestimmungsabschnitt (4) darstellt,
wobei der Positions- und Orientierungsdetektor (1-3) einen Entfernungssensor (1) umfasst, der dafür konfiguriert ist, Entfernungsdaten von Entfernungen von der Strahlungsbildgebungsvorrichtung zu realen Strukturen in mindestens zwei Dimensionen zu messen;
die Strahlungsbildgebungsvorrichtung eine Verarbeitungseinheit (4) umfasst, die dafür konfiguriert ist, die gemessenen Entfernungsdaten mit Referenzentfernungsdaten der Strukturen der realen Welt abzugleichen, um eine momentane Position der Strahlungsbildgebungsvorrichtung in mindestens zwei Dimensionen relativ zu den Strukturen der realen Welt als einen festen Bezugsrahmen zu bestimmen; und
die Verarbeitungseinheit (4) dafür konfiguriert ist, eine Translation und Rotation zu berechnen, die die gemessenen Entfernungsdaten am besten mit zuvor gemessenen Entfernungsdaten ausrichtet, um eine Änderung der Position und/oder Orientierung der Strahlungsbildgebungsvorrichtung im Laufe der Zeit zu messen.

2. Strahlungsbildgebungsvorrichtung nach Anspruch 1, wobei:
der Strahlungsdetektor (7) dafür konfiguriert ist, eine Stärke der ionisierenden Strahlung zu messen; und
der Strahlungsquellenbestimmungsabschnitt (4) dafür konfiguriert ist, eine Radioaktivität der Strahlungsquellen zu bestimmen.

3. Strahlungsbildgebungsvorrichtung nach Anspruch 2, wobei der Bildgenerator (4) dafür konfiguriert ist, Daten für das kombinierte Bild zu erzeugen, so dass das Überlagerungsbild die Radioaktivität der Strahlungsquellen basierend auf Daten aus dem Strahlungsquellenbestimmungsabschnitt (4) darstellt.

4. Strahlungsbildgebungsvorrichtung nach einem der vorhergehenden Ansprüche, wobei:
die Strahlungsbildgebungsvorrichtung einen Kollimator umfasst, der dafür konfiguriert ist, ionisierende Strahlung zu kollimieren, wobei der Strahlungsdetektor (7) dafür konfiguriert ist, von dem Kollimator kollimierte ionisierende Strahlung zu erfassen; oder
der Strahlungsdetektor (7) eine Compton-Kamera ist, die dafür konfiguriert ist, ionisierende Strahlung zu erfassen.

5. Strahlungsbildgebungsvorrichtung nach einem der vorhergehenden Ansprüche, wobei die Verarbeitungseinheit (4) dafür konfiguriert ist, die gemessenen Entfernungsdaten mit den Referenzentfernungsdaten in Echtzeit abzugleichen, um ein Modell eines untersuchten Bereichs zu erstellen, wobei das Modell mindestens zweidimensional ist.

6. Strahlungsbildgebungsvorrichtung nach Anspruch 5, umfassend:
eine Anzeige (8), das dafür konfiguriert ist, dem Benutzer das Modell anzuzeigen.

7. Strahlungsbildgebungsvorrichtung nach einem der vorhergehenden Ansprüche, umfassend:
eine Anzeige (8), die dafür konfiguriert ist, dem Benutzer Informationen über die augenblickliche Position der Strahlungsbildvorrichtung innerhalb des festen Bezugssystems anzuzeigen.

8. Strahlungsbildgebungsvorrichtung nach einem der vorhergehenden Ansprüche, umfassend:
eine Anzeige (8), die dafür konfiguriert ist, das kombinierte Bild basierend auf den vom Bildgenerator (4) erzeugten Daten anzuzeigen; und/oder
eine Bilddatenausgabevorrichtung, die dafür konfiguriert ist, die vom Bildgenerator (4) erzeugten Daten an eine externe Vorrichtung auszugeben.

9. Strahlungsbildgebungsvorrichtung nach einem der vorhergehenden Ansprüche, wobei:
der Positions- und Orientierungsdetektor (1-3) dafür konfiguriert ist, die momentane Position der Strahlungsbildgebungsvorrichtung unter Verwendung von LIDAR, SONAR oder RADAR zu bestimmen; und/oder
der Bildgenerator (4) dafür konfiguriert ist, Daten für das kombinierte Bild zu erzeugen, so dass das optische Bild ein optisches Echtzeitbild der von der optischen Bildgebungsvorrichtung (12) abgebildeten Strukturen der realen Welt ist; und/oder
der Strahlungsquellenbestimmungsabschnitt (4) dafür konfiguriert ist, die Verteilung der Strahlungsquellen mindestens teilweise basierend auf Daten ionisierender Strahlung zu bestimmen, die zuvor von dem Strahlungsdetektor (7) erfasst und in einem lokalen Arbeitsspeicher gespeichert wurden; und/oder
der Bildgenerator (4) dafür konfiguriert ist, Daten für das kombinierte Bild zu erzeugen, so dass das Überlagerungsbild hinzugefügt wird, wenn mehr Daten der vom Strahlungsdetektor (7) erfassten Strahlung vom Strahlungsquellenbestimmungsabschnitt (4) verwendet werden, um die Verteilung der Strahlungsquellen zu bestimmen.

10. Strahlungsbildgebungsvorrichtung nach einem der vorhergehenden Ansprüche, umfassend:
einen 3D-Modellgenerator, der dafür konfiguriert ist, ein 3D-Modell der realen Strukturen basierend auf den Daten des Positions- und Orientierungsdetektors (1-3) zu definieren.

11. Strahlungsbildgebungsvorrichtung nach einem der vorhergehenden Ansprüche, wobei die Strahlungsquellen so definiert sind, dass sie auf die Oberflächen der realen Strukturen in dem 3D-Modell beschränkt sind.

12. Strahlungsbildgebungsvorrichtung nach einem der vorhergehenden Ansprüche, wobei:
die Strahlungsbildgebungsvorrichtung tragbar ist; und/oder
die Strahlungsbildgebungsvorrichtung in der Hand gehalten wird.

13. Strahlungsbildgebungsverfahren, umfassend:
Abbilden von Strukturen der realen Welt unter Verwendung einer Strahlungsbildgebungsvorrichtung, um ein optisches Bild der Strukturen der realen Welt zu erzeugen;
Bestimmen einer augenblicklichen Position und Orientierung der Strahlungsbildgebungsvorrichtung in sechs Freiheitsgraden relativ zu den Strukturen der realen Welt als fester Bezugsrahmen;
Erfassen von ionisierender Strahlung mit Hilfe der Strahlungsbildvorrichtung;
Bestimmen einer Verteilung von Strahlungsquellen basierend auf Daten der von der Strahlungsbildgebungsvorrichtung erfassten ionisierenden Strahlung in Kombination mit Daten der Position und Orientierung der Strahlungsbildgebungsvorrichtung relativ zu den Strukturen der realen Welt; und
Erzeugen von Daten für ein kombiniertes Bild, das das optische Bild der Strukturen der realen Welt und ein Überlagerungsbild umfasst, das die Verteilung der Strahlungsquellen basierend auf der Bestimmung der Verteilung der Strahlungsquellen darstellt,
wobei der Schritt des Bestimmens einer augenblicklichen Position und Orientierung der Strahlungsbildgebungsvorrichtung umfasst:
Messen von Entfernungsdaten von der Strahlungsbildgebungsvorrichtung zu Strukturen der realen Welt in mindestens zwei Dimensionen; und
Ausrichten der gemessenen Entfernungsdaten mit Referenzentfernungsdaten der Strukturen der realen Welt, um eine momentane Position der Strahlungsbildgebungsvorrichtung in mindestens zwei Dimensionen relativ zu den Strukturen der realen Welt als einen festen Bezugsrahmen zu bestimmen;
wobei das Verfahren die Berechnung einer Translation und Rotation umfasst, die die gemessenen Entfernungsdaten am besten mit zuvor gemessenen Entfernungsdaten ausrichtet, um eine Änderung der Position und/oder Orientierung der Strahlungsbildgebungsvorrichtung über die Zeit zu messen.

14. Computerprogramm, das einen computerausführbaren Code umfasst, der, wenn er auf einem Computersystem ausgeführt wird, das eine optische Bildgebungsvorrichtung (12) und einen Strahlungsdetektor (7) umfasst, das Computersystem veranlasst, ein Strahlungsbildgebungsverfahren durchzuführen, wobei das Verfahren umfasst:
die optische Bildgebungsvorrichtung bildet Strukturen der realen Welt ab, um ein optisches Bild der Strukturen der realen Welt zu erzeugen;
Bestimmen einer momentanen Position und Orientierung des Computersystems in sechs Freiheitsgraden relativ zu den Strukturen der realen Welt als fester Bezugsrahmen;
der Strahlungsdetektor erfasst ionisierende Strahlung;
Bestimmen einer Verteilung von Strahlungsquellen basierend auf Daten der ionisierenden Strahlung kombiniert mit Daten der Position und Orientierung des Computersystems relativ zu den Strukturen der realen Welt; und
Erzeugen von Daten für ein kombiniertes Bild, das das optische Bild der Strukturen der realen Welt und ein Überlagerungsbild umfasst, das die Verteilung der Strahlungsquellen basierend auf der Bestimmung der Verteilung der Strahlungsquellen darstellt,
wobei der Schritt des Bestimmens einer augenblicklichen Position und Orientierung der Strahlungsbildgebungsvorrichtung umfasst:
Messen von Entfernungsdaten von der Strahlungsbildgebungsvorrichtung zu Strukturen der realen Welt in mindestens zwei Dimensionen; und
Ausrichten der gemessenen Entfernungsdaten mit Referenzentfernungsdaten der Strukturen der realen Welt, um eine momentane Position der Strahlungsbildgebungsvorrichtung in mindestens zwei Dimensionen relativ zu den Strukturen der realen Welt als einen festen Bezugsrahmen zu bestimmen;
wobei das Verfahren die Berechnung einer Translation und Rotation umfasst, die die gemessenen Entfernungsdaten am besten mit zuvor gemessenen Entfernungsdaten ausrichtet, um eine Änderung der Position und/oder Orientierung der Strahlungsbildgebungsvorrichtung über die Zeit zu messen.

15. Computerlesbares Medium, das das Computerprogramm nach Anspruch 14 speichert.

## Revendications

1. Appareil d'imagerie à rayonnement, comprenant :
un dispositif d'imagerie optique (12) configuré pour imager des structures de monde réel ;
un détecteur de position et d'orientation (1-3) configuré pour déterminer des position et orientation instantanées de l'appareil d'imagerie à rayonnement dans six degrés de liberté relativement aux structures de monde réel en tant que cadre fixe de référence ;
un détecteur de rayonnement (7) configuré pour détecter un rayonnement ionisant ;
une section de détermination de source de rayonnement (4) configurée pour déterminer une distribution de sources de rayonnement sur la base de données du rayonnement ionisant détecté par le détecteur de rayonnement (7), combinées à des données de la position et de l'orientation de l'appareil d'imagerie à rayonnement relativement aux structures de monde réel ; et
un générateur d'image (4) configuré pour générer des données pour une image combinée comprenant une image optique des structures de monde réel imagées par le dispositif d'imagerie optique (12) et une image de superposition représentant la distribution de sources de rayonnement sur la base de données provenant de la section de détermination de source de rayonnement (4),
dans lequel le détecteur de position et d'orientation (1-3) comprend un capteur télémétrique (1) configuré pour mesurer des données télémétriques de distances depuis l'appareil d'imagerie à rayonnement jusqu'à des structures de monde réel dans au moins deux dimensions ;
l'appareil d'imagerie à rayonnement comprend une unité de traitement (4) configurée pour aligner les données télémétriques mesurées avec des données télémétriques de référence des structures de monde réel afin de déterminer une position instantanée de l'appareil d'imagerie à rayonnement dans au moins deux dimensions relativement aux structures de monde réel en tant que cadre fixe de référence ; et
l'unité de traitement (4) est configurée pour calculer une translation et une rotation qui alignent le mieux les données télémétriques mesurées avec des données télémétriques mesurées auparavant afin de mesurer un changement de position et/ou d'orientation de l'appareil d'imagerie à rayonnement au fil du temps.

2. Appareil d'imagerie à rayonnement selon la revendication 1, dans lequel :
le détecteur de rayonnement (7) est configuré pour mesurer une amplitude de rayonnement ionisant ; et
la section de détermination de source de rayonnement (4) est configurée pour déterminer une radioactivité des sources de rayonnement.

3. Appareil d'imagerie à rayonnement selon la revendication 2, dans lequel le générateur d'image (4) est configuré pour générer des données pour l'image combinée de telle sorte que l'image de superposition représente la radioactivité de sources de rayonnement sur la base de données provenant de la section de détermination de source de rayonnement (4).

4. Appareil d'imagerie à rayonnement selon une quelconque revendication précédente, dans lequel :
l'appareil d'imagerie à rayonnement comprend un collimateur configuré pour collimater un rayonnement ionisant, dans lequel le détecteur de rayonnement (7) est configuré pour détecter un rayonnement ionisant collimaté par le collimateur ; ou
le détecteur de rayonnement (7) est une caméra Compton configurée pour détecter un rayonnement ionisant.

5. Appareil d'imagerie à rayonnement selon une quelconque revendication précédente, dans lequel l'unité de traitement (4) est configurée pour aligner les données télémétriques mesurées avec les données télémétriques de référence en temps réel afin de construire un modèle d'une région inspectée, dans lequel le modèle est dans au moins de deux dimensions.

6. Appareil d'imagerie à rayonnement selon la revendication 5, comprenant :
un écran d'affichage (8) configuré pour afficher le modèle pour l'utilisateur.

7. Appareil d'imagerie à rayonnement selon une quelconque revendication précédente, comprenant :
un écran d'affichage (8) configuré pour fournir en sortie, à un utilisateur, des informations pour indiquer la position instantanée de l'appareil d'imagerie à rayonnement à l'intérieur du cadre fixe de référence.

8. Appareil d'imagerie à rayonnement selon une quelconque revendication précédente, comprenant :
un écran d'affichage (8) configuré pour afficher l'image combinée sur la base des données générées par le générateur d'image (4) ; et/ou
un dispositif de sortie de données d'image configuré pour fournir en sortie, à un dispositif externe, les données générées par le générateur d'image (4).

9. Appareil d'imagerie à rayonnement selon une quelconque revendication précédente, dans lequel :
le détecteur de position et d'orientation (1-3) est configuré pour déterminer la position instantanée de l'appareil d'imagerie à rayonnement en utilisant LIDAR, SONAR ou RADAR ; et/ou
le générateur d'image (4) est configuré pour générer des données pour l'image combinée de telle sorte que l'image optique soit une image optique en temps réel des structures de monde réel imagées par le dispositif d'imagerie optique (12) ; et/ou
la section de détermination de source de rayonnement (4) est configurée pour déterminer la distribution de sources de rayonnement sur la base au moins partielle de données de rayonnement ionisant auparavant détectées par le détecteur de rayonnement (7) et stockées dans une mémoire locale ; et/ou
le générateur d'image (4) est configuré pour générer des données pour l'image combinée de telle sorte que l'image de superposition soit complétée au fur et à mesure que davantage de données de radiation détectées par le détecteur de rayonnement (7) sont utilisées par la section de détermination de source de rayonnement (4) pour déterminer la distribution de sources de rayonnement.

10. Appareil d'imagerie à rayonnement selon une quelconque revendication précédente, comprenant :
un générateur de modèle 3D configuré pour définir un modèle 3D des structures de monde réel sur la base de données provenant du détecteur de position et d'orientation (1-3).

11. Appareil d'imagerie à rayonnement selon une quelconque revendication précédente, dans lequel les sources de rayonnement sont définies comme étant limitées à des surfaces des structures de monde réel dans le modèle 3D.

12. Appareil d'imagerie à rayonnement selon une quelconque revendication précédente, dans lequel :
l'appareil d'imagerie à rayonnement est portatif ; et/ou
l'appareil d'imagerie à rayonnement est à main.

13. Procédé d'imagerie à rayonnement, comprenant :
l'imagerie de structures de monde réel en utilisant un appareil d'imagerie à rayonnement pour fournir une image optique des structures de monde réel ;
la détermination d'une position et d'une orientation instantanées de l'appareil d'imagerie à rayonnement dans six degrés de liberté relativement aux structures de monde réel en tant que cadre fixe de référence ;
la détection de rayonnement ionisant en utilisant l'appareil d'imagerie à rayonnement ;
la détermination d'une distribution de sources de rayonnement sur la base de données du rayonnement ionisant détecté par l'appareil d'imagerie à rayonnement, combinées à des données de la position et de l'orientation de l'appareil d'imagerie à rayonnement relativement aux structures de monde réel ; et
la génération de données pour une image combinée comprenant l'image optique des structures de monde réel et une image de superposition représentant la distribution de sources de rayonnement sur la base de la détermination de la distribution de sources de rayonnement,
dans lequel l'étape de la détermination d'une position et d'une orientation instantanées de l'appareil d'imagerie à rayonnement comprend :
la mesure de données télémétriques de distances depuis l'appareil d'imagerie à rayonnement jusqu'à des structures de monde réel dans au moins deux dimensions ; et
l'alignement des données télémétriques mesurées avec des données télémétriques de référence des structures de monde réel afin de déterminer une position instantanée de l'appareil d'imagerie à rayonnement dans au moins deux dimensions relativement aux structures de monde réel en tant que cadre fixe de référence ;
dans lequel le procédé comprend le calcul d'une translation et d'une rotation qui alignent le mieux les données télémétriques mesurées avec des données télémétriques mesurées auparavant afin de mesurer un changement de position et/ou d'orientation de l'appareil d'imagerie à rayonnement au fil du temps.

14. Programme informatique comprenant un code exécutable par ordinateur qui, lorsqu'il est exécuté sur un système informatique comprenant un dispositif d'imagerie optique (12) et un détecteur de rayonnement (7) fait en sorte que le système informatique réalise un procédé d'imagerie à rayonnement, le procédé comprenant :
le dispositif d'imagerie optique imageant des structures de monde réel pour fournir une image optique des structures de monde réel ;
la détermination d'une position et d'une orientation instantanées du système informatique dans six degrés de liberté relativement aux structures de monde réel en tant que cadre fixe de référence ;
le détecteur de rayonnement détectant un rayonnement ionisant ;
la détermination d'une distribution de sources de rayonnement sur la base de données du rayonnement ionisant, combinées à des données de la position et de l'orientation du système informatique relativement aux structures de monde réel ; et
la génération de données pour une image combinée comprenant l'image optique des structures de monde réel et une image de superposition représentant la distribution de sources de rayonnement sur la base de la détermination de la distribution de sources de rayonnement,
dans lequel l'étape de la détermination d'une position et d'une orientation instantanées de l'appareil d'imagerie à rayonnement comprend :
la mesure de données télémétriques de distances depuis l'appareil d'imagerie à rayonnement jusqu'à des structures de monde réel dans au moins deux dimensions ; et
l'alignement des données télémétriques mesurées avec des données télémétriques de référence des structures de monde réel afin de déterminer une position instantanée de l'appareil d'imagerie à rayonnement dans au moins deux dimensions relativement aux structures de monde réel en tant que cadre fixe de référence ;
dans lequel le procédé comprend le calcul d'une translation et d'une rotation qui alignent le mieux les données télémétriques mesurées avec des données télémétriques mesurées auparavant afin de mesurer un changement de position et/ou d'orientation de l'appareil d'imagerie à rayonnement au fil du temps.

15. Support lisible par ordinateur, stockant le programme informatique de la revendication 14.
